# EUROPEAN PATENT APPLICATION

(11) **EP 4 786 147 A2**
(43) Date of publication of application: **05.08.2026**
(21) Application number: 26185213.1
(22) Date of filing: 15.06.2026
(51) Int. Cl.: B29C 64/124, B29C 64/232, B29C 64/245, B29C 64/259, B29C 64/314, B29C 64/364, B33Y 30/00, B33Y 40/00

(54) **PRINTING METHOD, AND PRINTING DEVICE**

(30) Priority: 31.12.2025 CN 202512061742
(71) Applicant: Shining 3D Tech Co., Ltd., Hangzhou, Zhejiang 311258 (CN)
(72) Inventor: TAALAB, ELIAS, Hangzhou, 311258 (CN); Zhao, Xiaobo, Hangzhou, 311258 (CN); Chen, Da, Hangzhou, 311258 (CN); He, Junlin, Hangzhou, 311258 (CN); Zheng, Zhishun, Hangzhou, 311258 (CN)
(74) Representative: Metida

(57) **Abstract**

A printing method is provided. The method includes determining whether a receiving cavity (110) is sealed to a predetermined standard, and controlling a forming platform (130) to move away from a light-transmissive assembly (140) and filling the receiving cavity (110) with gas to release the forming platform (130) from the light-transmissive assembly (140). The method further includes controlling the forming platform (130) to move to a next printing position to perform a light curing process. A printing device is also provided.

## Description

### FIELD

The present application relates to a field of 3D printing, and in particular, to a printing method, and a printing device.

### BACKGROUND

Currently, in clinical 3D printing scenarios, high-viscosity resin materials are generally used for 3D printing. With the growth of medical needs such as dental restoration and surgical guides, the clinical 3D printing field has increasing demands for 3D printing devices that can handle high-viscosity biocompatible resins, easy to operate, and are efficient.

Conventional 3D printing devices adopt motor-screw-driven printing devices for printing. That is, a motor of the printing device controls a platform to move up and down along a Z-axis, thereby printing a target model established in advance for a target object layer by layer, ultimately obtaining the target object.

However, due to poor fluidity of high-viscosity resin materials, when printing the target object made of a high-viscosity resin material, it is easy for the printing material (high-viscosity resin material) not able to flow smoothly, thereby slowing the filling/flow rate of the printing material toward the print head, further leading to reduced printing efficiency.

### SUMMARY

Embodiments of the present disclosure provide a printing method and a printing device.

In a first aspect, an embodiment of the present disclosure provides the printing method applied to the printing device. The printing device includes a forming module defining a sealed receiving cavity, a light-transmissive assembly arranged on one side of the receiving cavity and a forming platform arranged opposite to the light-transmissive assembly, the receiving cavity receiving printing material, and the forming platform movable toward or away from the light-transmissive assembly; the printing method includes: determining whether the receiving cavity is sealed to a predetermined standard; controlling the forming platform to move away from the light-transmissive assembly and filling the receiving cavity with gas to release the forming platform from the light-transmissive assembly, and controlling the forming platform to move to a next printing position to perform a light curing process.

In a second aspect, an embodiment of the present disclosure provides a printing device, including: a forming module defining a sealed receiving cavity, a light-transmissive assembly arranged on one side of the receiving cavity and a forming platform arranged opposite to the light-transmissive assembly, wherein the receiving cavity receives printing material, and wherein the forming platform is movable toward or away from the light-transmissive assembly; a storage device; and at least one processor; wherein the storage device stores one or more programs that, when executed by the at least one processor, cause the at least one processor to: determine whether the receiving cavity is sealed to a predetermined standard; control the forming platform to move away from the light-transmissive assembly and fill the receiving cavity with gas to release the forming platform from the light-transmissive assembly; and control the forming platform to move to a next printing position to perform a light curing process.

### BRIEF DESCRIPTION OF THE DRAWINGS

FIG. 1 is a schematic flowchart of a printing method provided by the present disclosure.
FIG. 2 is a schematic structural diagram of a printing device provided by the present disclosure.
FIG. 3 is a schematic diagram of identification of an identification device provided by the present disclosure.
FIG. 4 is a schematic cross-sectional view of a forming module provided by the present disclosure.
FIG. 5 is a schematic structural diagram of a portion of the printing device provided by the present disclosure.
FIG. 6 is a schematic structural diagram of an eddy current sensor and an elastic element provided by the present disclosure.
FIG. 7 is a schematic structural diagram of a printing device provided by the present disclosure.
FIG. 8 is a schematic structural diagram of an electronic device provided by the present disclosure.

### DETAILED DESCRIPTION

In the description of the present application, it should also be noted that, unless otherwise expressly specified and limited, the terms "disposed," "installed," "connected," "coupled" should be interpreted broadly. For example, the connection may be a fixed connection, a detachable connection, or an integral connection. Or maybe a mechanical connection or an electrical connection. Or maybe a direct connection or an indirect connection through an intermediate medium, and maybe internal communication between two elements. For those of ordinary skill in the art, the specific meanings of the above terms in the present invention may be understood according to specific circumstances.

Currently, in clinical 3D printing scenarios, high-viscosity resin materials are generally used for 3D printing. With the growth of medical needs such as dental restoration and surgical guides, the clinical 3D printing field has increasing demands for 3D printing devices that can handle high-viscosity biocompatible resins and are easy to operate and efficient.

Conventional 3D printing devices adopt motor-screw-driven printing devices for printing. That is, a motor of the printing device controls a platform to move up and down along a Z-axis, thereby printing a target model established in advance for a target object layer by layer, ultimately obtaining the printed target object.

However, due to the poor fluidity of high-viscosity resin materials, when printing a target object made of a high-viscosity resin material, the high-viscosity resin material is prone to poor flow, thereby slowing the filling/flow rate of the printing material toward the print head and further leading to reduced printing efficiency.

In view of the above scenario, it is known that the prior art has the technical problem of relatively low printing efficiency.

In the printing method, apparatus, device, storage medium, and product provided by the embodiments of the present disclosure, the method includes an identification device identification process, a sealing determination process, a stirring process, and a printing process. Among them, by obtaining attribute information of the printing material through the identification device, the execution parameters of the printing device may be dynamically adjusted, thereby improving printing efficiency, quality, and reliability. Through the sealing determination process, it may be ensured that the stirring process and the printing process operate normally, thereby improving printing success rate and reliability and avoiding waste of printing material. Stirring the printing material may improve the uniformity of the material, thereby improving printing quality. In this solution, there are various ways to control the movement of the forming platform. During stirring, the forming platform is controlled to move away from the light-transmissive assembly and filled the receiving cavity with gas, and the forming platform is controlled to move toward the light-transmissive assembly and relieve pressure from the receiving cavity, thereby achieving, in addition to mechanical stirring, assisting the rapid flow of the printing material with air pressure, which may further improve the stirring effect. During release, the release process includes controlling the forming platform to move away from the light-transmissive assembly to release a printed layer from the light-transmissive assembly; and also includes filling the receiving cavity with gas during release, using the pressure difference inside and outside the receiving cavity to form opposing forces on the printed layer and the light-transmissive assembly, accelerating the release of the printed layer from the light-transmissive assembly. During the release period, the larger pressure in the receiving cavity causes the printing material to flow between the printed layer and the light-transmissive assembly, further accelerating release and the backflow replenishment of the printing material, thereby improving printing efficiency. Controlling the forming platform to move away from the light-transmissive assembly may be performed by an air pressure driving manner, which controls the pressure in the receiving cavity to form an air pressure driving force on the forming platform away from the light-transmissive assembly, driving the forming platform to move away from the light-transmissive assembly. Or by a combined mechanical and air pressure driving manner, i.e., controlling the air pressure in the receiving cavity and controlling the movement of a cantilever to form a driving force on the forming platform away from the light-transmissive assembly, where the air pressure driving force and the mechanical driving force together drive the forming platform to move. The sum of the air pressure driving force and the mechanical driving force is not less than the driving force required to move the forming platform. The air pressure driving force may be a relatively small driving force to assist the mechanical driving force, which may reduce the power consumption of the motor and lower printing costs, and vice versa. The solution of the present disclosure may achieve the effects of improving 3D printing efficiency, stability, and success rate. Of course, a mechanical driving manner may also be used, where the receiving cavity is not filled with gas, and the forming platform is driven to move solely by mechanical driving force, but the release effect and working efficiency are not as good as the aforementioned implementation manners.

The technical solution of the present disclosure and how it solves the above technical problems will be described in detail below with specific embodiments. The following specific embodiments may be combined with each other, and the same or similar concepts or processes may not be described again in some embodiments. The embodiments of the present disclosure will be described below with reference to the accompanying drawings.

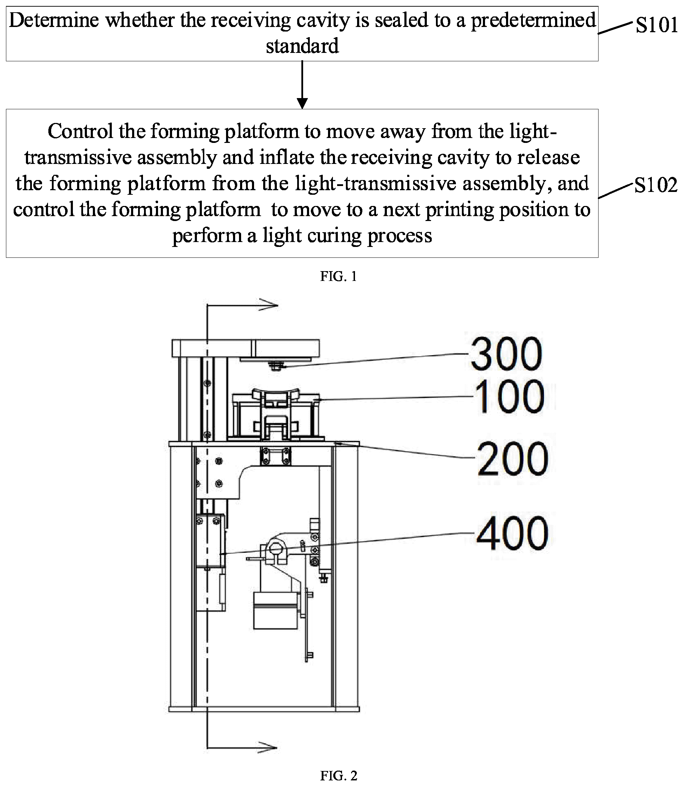

FIG. 1 is a schematic flowchart of a printing method provided by the present disclosure. As shown in FIG. 1, a printing device includes a forming module. The forming module defines a sealed receiving cavity. The forming module includes a light-transmissive assembly arranged on one side of the receiving cavity and a forming platform arranged opposite to the light-transmissive assembly. The receiving cavity is used for receiving printing material. The forming platform is movable toward or away from the light-transmissive assembly. The method includes:
S101, whether the receiving cavity is sealed to a predetermined standard is determined.

In some embodiments, the forming module may be a container assembly with a limited number of uses. The receiving cavity is pre-filled with the printing material. The printing material is typically used up within a limited number of times, usually 1-10 times, preferably 1-5 times, for example, 1 time, or 5 times, or 3 times. It is disposable after use, which is very convenient to use and may ensure high success rate, high quality, and high efficiency of printing, with very good reliability. Of course, the receiving cavity may also be continuously refilled with the printing material (i.e., filled before printing) for long-term use, but the convenience and reliability are far inferior to the former. The receiving cavity is used to receive the printing material (e.g., a high-viscosity resin material). It may be pre-packaged with the printing material at the factory, or may be filled with the printing material before printing.

In some embodiments, FIG. 2 is a schematic structural diagram of a printing device provided by the present disclosure. As shown in FIG. 2, the printing device includes a forming module 100, a positioning assembly 200, a gas injection mechanism 300, and a limiting mechanism 400. The positioning assembly 200 is used to fix the forming module 100. The gas injection mechanism 300 is used to fill the receiving cavity with gas and relieve pressure from the forming module 100. The forming module 100 is mounted on the printing device via the positioning assembly 200. The gas injection mechanism 300 is used to inflate or relieve pressure from the forming module 100. The limiting mechanism 400 includes a cantilever that cooperates with a forming platform of the forming module and a driving member that is drivingly connected to the cantilever. It should be noted that some components of each module may be integrated into the device or may be provided independently of the device.

In some embodiments, the printing device is in a networked state during the printing process.

In some embodiments, before determining whether the receiving cavity of the forming module is sealed, the forming module may be determined first.

In some embodiments, the forming module includes an identification device. The printing method further includes:
Attribute information of the printing material is obtained by identifying the identification device; and
Dynamically adjusting an execution parameter of the printing device based on the attribute information.

Exemplarily, the identification device may be a read-only tag, such as a barcode, a QR code, a numeric code, or other coded tags, or may be a read-only electronic tag such as a Radio Frequency Identification (RFID) tag or a Near Field Communication (NFC) tag. Of course, the identification device is preferably a readable and writable electronic tag such as an RFID or NFC tag. In the case where the forming module may be used multiple times, the usage status of the forming module may be updated in real time and the usage status of the forming module may be known in real time, avoiding the use of an unreliable forming module. In practical applications, the identification device may be identified after the forming module is fixed to the printing device, or the forming module may be fixed to the printing device after the identification device is identified first.

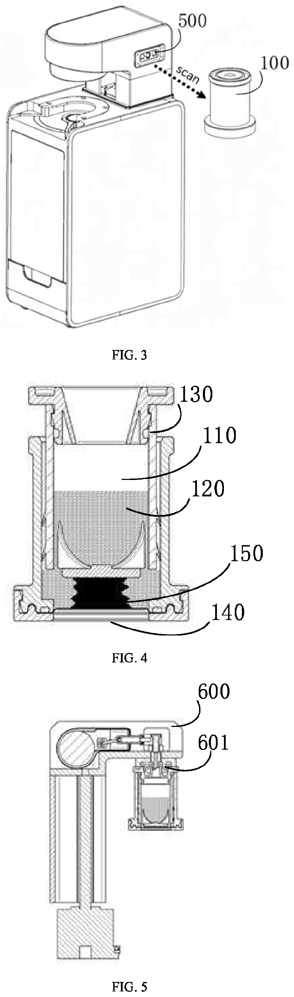

In some embodiments, FIG. 3 is a schematic diagram of identification of an identification device provided by the present disclosure. As shown in FIG. 3, the printing device may be provided with an identification device 500, which may be an image sensor such as a camera, or a magnetic induction device such as a Near Field Communication (NFC) unit, to identify the identification device of the forming module 100.

Exemplarily, the attribute information may include a material type of the printing material, or availability status of the material, or printing parameters of the material, or availability status of the forming module, etc. The material type of the printing material, such as one or more of name, number, category, etc., is obtained to determine whether the printing material in the forming module matches the target printed object, and to determine printing parameters accordingly. The availability status of the material may be used to identify the used amount/remaining amount of the printing material, and to determine whether to continue printing accordingly. The availability status of the forming module may be used to identify the number of times the forming module has been used/remaining number of times it may be used, and to determine whether to continue printing accordingly. In some embodiments, the forming module may also be managed for use according to a preset number of times, such as determining whether to print based on the number of paid times, for example, determining whether to print based on the number of uses after the user has purchased a one - time or limited-use license. It should be noted that the printing parameters of the material may also be directly stored in the identification device, obtained by reading, and corresponding execution parameters of the printing device may be updated accordingly, without requiring the printing device to obtain and update them by matching based on the material type.

Exemplarily, the execution parameter of the printing device may be a stirring parameter and a printing parameter corresponding to the forming module (or the printing material). The printing parameter may include a motor control parameter of the driving member during printing, and an air pump control parameter for inflation and pressure relief. The stirring parameter may include a motor control parameter of the driving member during stirring, and an air pump control parameter for inflation and pressure relief. Specifically, the printing parameter may include one or more of the following: an optical machine parameter (e.g., one or more of light intensity, exposure time), a movement parameter of the forming platform (e.g., speed, release distance/position/time), an air pressure parameter of the receiving cavity (e.g., flow rate, pressure upper limit/inflation time, pressure lower limit). The stirring parameter may include one or more of the following: a movement parameter of the forming platform (e.g., a speed, a moving away distance/position/time, a moving toward distance/position/time, a number of reciprocations/time), the air pressure parameter of the receiving cavity (e.g., an inflation flow rate, a pressure upper limit/inflation time, a pressure lower limit, a number of inflation and pressure relief alternations). Dynamically adjusting the printing parameters may improve the efficiency, configurability, and reliability of the printing process. It should be noted that the movement parameter of the forming platform may also be control parameter of the driving member, and the air pressure parameter of the receiving cavity may also be control parameter of the air pump used for inflation.

In some embodiments, determining whether the receiving cavity is sealed to the predetermined standard includes:
Filling the receiving cavity with gas, and determining whether the receiving cavity is sealed to the predetermined standard.

Exemplarily, during continuous filling the receiving cavity with gas, an inflation flow rate is monitored by a mass flow meter. If the receiving cavity is sealed to the predetermined standard, the flow rate will drop to a very low value within a short period of time (indicating that the pressure in the cavity is saturated). Conversely, a leak will cause the flow rate to remain continuously high. The sealing state may be determined by analyzing a pressure-flow rate response curve during the inflation process. The sealing determination process may improve the success rate of the printing process and avoid waste of printing material.

In some embodiments, the determining whether the receiving cavity is sealed to the predetermined standard includes:
A pressure of the receiving cavity is equal to a first preset pressure by filling the receiving cavity with gas; a pressure change value of the receiving cavity is monitored within a preset time period;
In response to a determination that the pressure change value within the preset time period is less than or equal to a first pressure threshold, the receiving cavity is determined to be properly sealed.

Exemplarily, the first preset pressure may be any pressure, as long as it is within the safe pressure range of the forming module and sufficient to generate a measurable pressure and pressure change. In practice, it is typically set to a pressure value lower than the maximum release air pressure.

It should be noted that the first preset pressure used for inflation during the sealing determination, the pressure used for inflation during the stirring of the printing material, and the pressure used for inflation during the printing release may be the same or different.

Exemplarily, the preset time period is generally determined by response time of the printing device, the time required for pressure stabilization, and the maximum allowable detection time. It is necessary to ensure that a minute leak is sufficient to produce a distinguishable pressure change within this period, and is usually obtained through experimental calibration.

Exemplarily, the first pressure threshold is generally set comprehensively based on the measurement accuracy of the pressure sensor, the amplitude of natural pressure fluctuation caused by factors such as temperature when the forming module is in a sealed state, and the allowable minute leak rate.

In this embodiment, performing sealing determination by inflation and pressure monitoring may improve the accuracy of the sealing determination.

In some embodiments, the printing method further includes:
Stirring the printing material of the receiving cavity.

Exemplarily, a micro-stirrer may be integrated within the forming module and controlled by an external drive unit to move, actively and forcibly mechanically mixing the printing material of the receiving cavity. Exemplarily, the forming platform may be controlled to perform a reciprocating motion of a specific amplitude and frequency of the receiving cavity, or combined with lateral shaking, using the platform motion to generate turbulence within the sealed receiving cavity, thereby achieving fluid agitation of the printing material to homogenize the printing material and prevent sedimentation/release of the printing material due to long-term standing.

In some embodiments, FIG. 4 is a schematic cross-sectional view of a forming module provided by the present disclosure. As shown in FIG. 4, the forming module is in the shape of a cylindrical barrel and includes an inner cylinder and an outer cylinder. The outer side wall of the inner cylinder is dynamically and sealingly fitted with the inner side wall of the outer cylinder. The inner cylinder and the outer cylinder form a sealed and communicating receiving cavity 110. The receiving cavity 110 may hold the printing material 120. The inner cylinder serves as the forming platform 130. The bottom of the outer cylinder, arranged opposite to the forming platform, serves as the light-transmissive assembly 140. The black pattern between the light-transmissive assembly and the forming platform schematically represents a printed layer 150.

In some embodiments, based on the forming module of FIG. 4, FIG. 5 is a schematic structural diagram of a portion of a printing device provided by the present disclosure. As shown in FIG. 5, the printing device further includes a cantilever 600, and the cantilever is provided with a clamp 601.

In one embodiment, the printing method further includes:
When the forming module is fixedly disposed on the printing device, the cantilever is controlled to move so that the cantilever contacts the forming platform; and
The clamp on the cantilever is controlled to clamp the forming platform.

The contact between the cantilever and the forming platform is detected by a sensor. In this implementation manner, the cantilever abuts against the forming platform and causes the forming platform to abut against the light-transmissive assembly (the light-transmissive assembly is supported and tensioned on the printing device). Exemplarily, by detecting that the cantilever abuts the forming platform against the light-transmissive assembly via an eddy current sensor, the clamp on the cantilever may be controlled to clamp the forming platform. The cantilever contacts the forming platform, and the clamp of the cantilever may achieve a clamping fit with the forming platform. By clamping the forming platform with the clamp, the movement of the cantilever may drive the forming platform to move.

It should be noted that an inflation port communicating with the receiving cavity is provided at the top of the forming platform. The cantilever has an inflation connector that cooperates and communicates with the inflation port. Through the cooperation of the cantilever and the forming platform, the inflation connector is brought into cooperative communication with the inflation port. Furthermore, the inflation port is provided with a sealing member such as aluminum foil and/or a heat shrink film. The cantilever moves toward the forming platform so that a piercing member on the cantilever pierces the sealing member, and then the inflation connector is inserted and cooperatively communicated with the inflation port. In this implementation manner, the cantilever is fixedly connected to or abuts against the forming platform, and the cantilever and the forming platform move synchronously. Of course, the inflation connector may also be independently communicated with the inflation port without relying on the coop eration state between the cantilever and the forming platform. In this implementation manner, controlling the cantilever to move toward the forming module specifically includes controlling the cantilever to move toward the forming module so that the piercing member on the cantilever pierces the sealing member of the forming platform, controlling the cantilever to move toward the forming module so that the inflation connector on the cantilever is inserted and cooperatively communicated with the inflation port of the forming platform, controlling the cantilever to move toward the forming module so that the cantilever abuts against the forming platform, and further controlling the cantilever to move toward the forming module so that the cantilever abuts against the forming platform and causes the forming platform to abut against the light-transmissive assembly (the light-transmissive assembly is supported and tensioned on the printing device). In the state where the cantilever abuts against the forming platform, the clamp on the cantilever is controlled to clamp the forming platform to form a fixed connection. In the state where the forming platform abuts against the light-transmissive assembly, the zero-position detection is performed.

In some embodiments, the stirring the printing material of the receiving cavity includes:
The forming platform is driven to reciprocate to stir the printing material of the receiving cavity.

It should be noted that the bottom of the forming platform as shown in FIG. 4 has a hollow design to allow the printing material to flow into or out of the accommodating space inside the forming platform.

In this embodiment, by controlling the forming platform to move toward or away from the light-transmissive assembly to stir the printing material in the receiving cavity, the printing material is caused to flow within the receiving cavity, thereby achieving a homogenization effect of the printing material and solving the problem of sedimentation/release of the printing material.

In some embodiments, the stirring the printing material of the receiving cavity further includes:
A filling operation and a pressure relief operation are alternately performed on the receiving cavity.

Exemplarily, when driving the forming platform to reciprocate, the receiving cavity may be alternately filled with gas and relieved of pressure to accelerate the flow of the printing material, thereby further improving the stirring efficiency. It should be noted that in the case where the forming platform is moved by an air pressure driving manner, filling the receiving cavity with gas to form a driving force on the forming platform simultaneously drives the forming platform to move away from the light-transmissive assembly and fills the receiving cavity with gas, achieving efficient stirring and a good stirring effect.

Exemplarily, the inflation and pressure relief operations may be performed during each reciprocation of the forming platform (i.e., each time the forming platform performs one movement toward the light-transmissive assembly and one movement away from the light-transmissive assembly), or may be performed during selected reciprocations among multiple reciprocations.

In some embodiments, the stirring the printing material of the receiving cavity includes:
The forming platform is controlled to move away from the light-transmissive assembly and the receiving cavity is filled with gas, and the forming platform is controlled to move toward the light-transmissive assembly and pressure from the receiving cavity is relieved.

Specifically, when controlling the forming platform to move away from the light-transmissive assembly, the receiving cavity is pressurized to a second preset pressure. The second preset pressure is generally greater than the ambient pressure, i.e., a pressure difference is formed between the inside and outside of the receiving cavity, with the internal pressure being greater than the external pressure. Further, the receiving cavity is continuously filled with gas so that the air pressure in the receiving cavity reaches the second preset pressure and is stabilized at the second preset pressure. The second preset pressure may be a fixed value or a pressure range, as long as it is within the safe pressure range of the forming module. Of course, the second preset pressure may not be set. Instead, the receiving cavity may be continuously filled with gas during the movement of the forming platform away from the light-transmissive assembly toward a target position (e.g., a first preset position), as long as the air pressure in the receiving cavity is less than or equal to the safe pressure of the forming module.

In the case where the forming platform is driven by an air pressure driving manner, the forming platform is driven to move away from the light-transmissive assembly by filling the receiving cavity with gas. The movement of the forming platform mechanically stirs the printing material, and the increased air pressure in the receiving cavity accelerates the flow of the printing material, further improving the stirring efficiency. That is, in this implementation manner, the receiving cavity is first filled with gas until the air pressure in the receiving cavity forms a driving force on the forming platform. The forming platform moves, and the receiving cavity is in a state of the second preset pressure, where the air pressure in the receiving cavity forms a driving force on the forming platform.

Similarly, when controlling the forming platform to move toward the light-transmissive assembly, the receiving cavity is relieved of pressure. The pressure may be relieved by the ambient pressure or to a pressure greater than the ambient pressure. Relieving pressure reduces the resistance encountered by the forming platform when moving toward the light-transmissive assembly and also prevents the pressure in the receiving cavity from being limited to a certain range due to continuous inflation, ensuring that it is less than or equal to the safe pressure of the forming module. Preferably, the pressure is relieved to the ambient pressure, which only requires communicating the receiving cavity with the environment, resulting in a simple structure and simple control. Alternatively, pressure relief may not be performed, as long as it is ensured that the air pressure in the receiving cavity is less than or equal to the safe pressure of the forming module during the entire stirring process.

It should be noted that in the pneumatic driving manner, achieving precise control of the movement distance/position typically requires the introduction of a complex distance/position control module, which is structurally complex and costly. To simplify the structure and control costs, in this embodiment, a limiting mechanism is used in cooperation with the forming platform. The precise movement of the limiting mechanism controls the movement distance/position of the forming platform. The limiting mechanism includes a cantilever that cooperates with the forming platform and a driving member that drives the cantilever to move. The cantilever is driven by the driving member to move away from the light-transmissive assembly to a target position (first preset position). The forming platform moves to the first preset position and is limited by the cantilever and cannot continue moving. The cantilever is driven by the driving member to move toward the light-transmissive assembly, pushing the forming platform to move to a target position (second preset position). Through the precise control of the movement of the cantilever, the forming platform can be precisely moved to the target position. The driving member is generally preferably a motor.

In some embodiments, the stirring the printing material of the receiving cavity includes:
The forming platform is controlled to move away from the light-transmissive assembly to a first preset position;
The forming platform is controlled to move toward the light-transmissive assembly to a second preset position; and
The above blocks are repeated until the stirring of the printing material is completed.

Exemplarily, the driving member may be controlled to move the cantilever away from the light-transmissive assembly to the first preset position, so as to limit the upper limit position (target position) of the forming platform moving away from the light-transmissive assembly to the first preset position. The driving member may be controlled to move the cantilever toward the light-transmissive assembly to the second preset position (target position), so as to limit the lower limit position (target position) of the forming platform moving toward the light-transmissive assembly to the second preset position.

Exemplarily, the values of the first preset position and the second preset position are determined together by the required stirring stroke distance of the printing material and the physical limits of the receiving cavity. Preferably, when the forming platform moves to the first preset position, the printing material is transferred to the space between the forming platform and the light-transmissive assembly. When the forming platform moves to the second preset position, the forming platform abuts against the light-transmissive assembly (the light-transmissive assembly is in a state of being supported and tensioned on the printing device).

In this embodiment, the stirring process reciprocates the forming platform between two points to fully stir the printing material and ensure the safety of stirring, avoiding damage to the forming module.

S102, the forming platform is controlled to move away from the light-transmissive assembly and the receiving cavity is filled with gas to release the forming platform from the light-transmissive assembly , and the forming platform is controlled to move to a next printing position to perform a light curing process.

Exemplarily, when the sealing determination is qualified, printing is performed. In this embodiment, specifically, when the sealing determination is qualified and the stirring process is completed, printing is performed.

In some embodiments, the controlling the forming platform to move away from the light-transmissive assembly and filling the receiving cavity with gas to release the forming platform from the light-transmissive assembly, and controlling the forming platform to move to a next printing position to perform a light curing process includes:
The forming platform is controlled to move away from the light-transmissive assembly to release the forming platform from the light-transmissive assembly, and the forming platform is controlled to move to the next printing position to perform the light curing process.

In some embodiments, the controlling the forming platform to move away from the light-transmissive assembly and filling the receiving cavity with gas to release the forming platform from the light-transmissive assembly, and controlling the forming platform to move to a next printing position to perform a light curing process includes:
A filling operation and a pressure relief operation are alternately performed on the receiving cavity.

In some embodiments, the controlling the forming platform to move away from the light-transmissive assembly and filling the receiving cavity with gas to release the forming platform from the light-transmissive assembly, and controlling the forming platform to move to a next printing position to perform a light curing process specifically includes:
The forming platform is controlled to move away from the light-transmissive assembly by a first preset distance and the receiving cavity is filled with gas to perform the release;
After the release is completed, the forming platform is controlled to move to the next printing position and the pressure is relieved from the receiving cavity to perform the light curing process; and
The above blocks are repeated until a target model is printed completed.

Exemplarily, the first preset distance is the lifting height of the forming platform during the release stage (i.e., the third preset position to which the forming platform moves during the release stage). Its value may be determined by a release test and preset. When the forming platform has completed the movement of the first preset distance, the release is necessarily completed. That is, the first preset distance is not less than the movement distance required for the forming platform to complete the release. Of course, a movement time may also be set to determine the completion of release, or a sensor may be used for real-time detection. The specific manner is not limited one by one. It should also be noted that, due to the inflation operation during the release process, the release becomes easy and may be completed quickly. Therefore, the value of the first preset distance may be set smaller than in the prior art. It is even possible that when the forming platform completes the movement of the first preset distance, it moves to the next printing position. That is, the forming platform moves toward the next printing position during the release process, greatly improving printing efficiency. In this implementation manner, the pressure relief operation may be performed after the completion of the previous release and before the start of the next release. In practical applications, after completing the movement of the first preset distance, the forming platform generally continues to move toward the next printing position. Typically, the forming platform moves toward the light-transmissive assembly to the next printing position. At the printing position, the forming platform irradiates the printing material in the receiving cavity with light. The printing material between the forming platform and the light-transmissive assembly is light-cured to form a printed layer, which is attached directly or indirectly to the forming platform.

After the release is completed, i.e., after the forming platform completes the movement of the first preset distance, it starts to move toward the next printing position, and simultaneously relieves pressure from the receiving cavity (e.g., communicates the receiving cavity with the environment). The pressure relief operation reduces the resistance encountered by the forming platform when moving toward the light-transmissive assembly, and also ensures that the flexible light-transmissive assembly maintains a good state and provides a reliable molding interface during the light irradiation curing. Of course, pressure relief may be performed before the forming platform starts moving toward the next printing position, or after. Preferably, pressure relief is completed before the light irradiation curing to ensure the state of the light-transmissive assembly. It should be noted that a rigid light-transmissive assembly typically does not require such setting; it is only necessary to relieve pressure before the next release to prevent the receiving cavity from continuously being at a relatively high pressure.

In practical applications, a base layer is typically printed first, i.e., a layer pre -cured on the forming platform before printing the target model. Its main function is to provide a good starting printing plane, ensuring the accuracy and stability of subsequent model printing. Because the forming platform and the light-transmissive assembly may not be completely parallel before printing, by printing the base layer, a plane parallel to the light-transmissive assembly and flat can be obtained.

After the release of the base layer is completed, printing of the printed layers of the target model begins. The first printed layer of the target model is attached to the printing platform via the base layer, and other printed layers are attached to the previous printed layer, thereby attaching the target model to the printing platform.

It should be noted that the release process includes controlling the forming platform to move away from the light-transmissive assembly to move the printed layer away from the light-transmissive assembly; and also includes filling the receiving cavity with gas during controlling the forming platform to move away from the light-transmissive assembly, using the pressure difference inside and outside the receiving cavity to form opposing forces on the printed layer and the light-transmissive assembly, accelerating the release of the printed layer from the light-transmissive assembly.

In some embodiments, the method further includes:
During controlling the forming platform to move away from the light-transmissive assembly, a pressure in the receiving cavity is controlled to be greater than an ambient pressure; and/or, during the light curing process, the pressure in the receiving cavity is controlled to be equal to the ambient pressure.

Exemplarily, during controlling the forming platform to move away from the light-transmissive assembly, the receiving cavity is filled with gas so that the pressure in the receiving cavity is greater than the ambient pressure. The pressure difference inside and outside the receiving cavity may cause the light-transmissive assembly to be subjected to an outward force (away from the forming platform), and also cause the forming platform and the printed layer attached thereto to be subjected to an outward force (away from the light-transmissive assembly).

Specifically, when controlling the forming platform to move away from the light-transmissive assembly, the receiving cavity is pressurized to a third preset pressure. The third preset pressure is generally greater than the ambient pressure, i.e., a pressure difference is formed between the inside and outside of the receiving cavity, with the internal pressure being greater than the external pressure. Further, the receiving cavity is continuously filled with gas so that the air pressure in the receiving cavity reaches the third preset pressure and is stabilized at the third preset pressure. The third preset pressure may be a fixed value or a pressure range, as long as it is within the safe pressure range of the forming module. Of course, the third preset pressure may not be set. Instead, the receiving cavity may be continuously filled with gas during the movement of the forming platform away from the light-transmissive assembly, as long as the air pressure in the receiving cavity is less than or equal to the safe pressure of the forming module. The first preset pressure, the second preset pressure, and the third preset pressure may be the same or different.

In the case where the forming platform is driven by an air pressure driving manner, filling the receiving cavity with gas drives the forming platform to move away from the light-transmissive assembly, releasing the forming platform from the light-transmissive assembly, and the increased air pressure in the receiving cavity accelerates the backflow and leveling of the printing material, further improving printing efficiency. That is, in this implementation manner, the receiving cavity is first filled with gas until the air pressure in the receiving cavity forms a driving force on the forming platform. The forming platform moves, and the receiving cavity is in a state of the third preset pressure, where the air pressure in the receiving cavity forms a driving force on the forming platform.

Furthermore, during controlling the forming platform to move away from the light-transmissive assembly, the larger pressure in the receiving cavity causes the printing material to flow more quickly between the printed layer and the light-transmissive assembly, further accelerating release and the backflow replenishment of the printing material.

This embodiment, by providing a pressure difference, can further improve the release efficiency and the integrity of the release of the printed layer.

During the light irradiation curing period, the pressure in the receiving cavity is equal to the ambient pressure, ensuring that the light-transmissive assembly is in a stable and flat state, ensuring good light curing process and the formation of the expected printed layer.

In some embodiments, during the light irradiation curing period, the pressure in the receiving cavity may also be set to be greater than the ambient pressure but less than the pressure during the release period. That is, the receiving cavity is relieved of pressure after the release is completed, avoiding continuous pressurization of the receiving cavity and also avoiding the receiving cavity continuously being at a relatively high pressure state. This implementation manner has a slight impact on the flexible light-transmissive assembly.

In some embodiments, controlling the forming platform to move away from the light-transmissive assembly is implemented by any of the following manners:
An air pressure driving manner, which includes controlling the pressure in the receiving cavity to increase so that the pressure in the receiving cavity is higher than the ambient pressure and forms a driving force on the forming platform away from the light-transmissive assembly;
A combined mechanical and air pressure driving manner, which includes controlling a cantilever of the printing device to move away from the light-transmissive assembly and controlling the pressure in the receiving cavity to increase so that the pressure in the receiving cavity is higher than the ambient pressure to form a driving force on the forming platform away from the light-transmissive assembly, driving the forming platform fixedly connected to the cantilever to move.

This example may be based on the schematic diagram of the cantilever of the printing device in FIG. 5. It should be noted that in the present disclosure, controlling the forming platform to move away from the light-transmissive assembly is involved in both the execution of the stirring step and the execution of the printing process. This embodiment is a specific description of the implementation manners of the movement.

Where, when the air pressure driving manner is executed, only the air pressure driving force drives the forming platform to move away from the light-transmissive assembly. At this time, the cantilever connected to the forming platform serves as a limiting member for this movement. Specifically, the cantilever may be controlled to move to a target position to precisely limit the end point of the movement of the forming platform to that target position, i.e., the forming platform moves to the target position and is blocked by the cantilever and cannot continue moving. It should be noted that in this driving manner, the air pressure driving force should be not less than the minimum force required to move the forming platform. Of course, the cantilever and the forming platform may move synchronously. In this implementation manner, the cantilever and the forming platform are in a contact fit. In this implementation manner, controlling the cantilever to move toward the light-transmissive assembly can push the forming platform to move toward the light-transmissive assembly.

Where, when the combined mechanical and air pressure driving manner is executed, both the air pressure driving force and the mechanical driving force drive the forming platform to move away from the light-transmissive assembly. At this time, the cantilever connected to the forming platform serves as a driving member and a limiting member for this movement. The cantilever is fixedly connected to the forming platform. The movement of the cantilever away from the light-transmissive assembly drives the forming platform to move away from the light-transmissive assembly. The movement of the cantilever toward the light-transmissive assembly drives the forming platform to move toward the light-transmissive assembly. When the cantilever stops, the forming platform stops accordingly. The movement of the forming platform and the precise control of its movement position are achieved through the cantilever. In this implementation manner, the sum of the air pressure driving force and the mechanical driving force is not less than the driving force required to move the forming platform. Wherein, when the mechanical driving manner is executed, only the mechanical driving force drives the forming platform to move away from the light-transmissive assembly. At this time, the cantilever connected to the forming platform serves as a driving member and a limiting member for this movement. The cantilever is fixedly connected to the forming platform. The movement of the cantilever away from the light-transmissive assembly drives the forming platform to move away from the light-transmissive assembly. The movement of the cantilever toward the light-transmissive assembly drives the forming platform to move toward the light-transmissive assembly. When the cantilever stops, the forming platform stops accordingly. The movement of the forming platform and the precise control of its movement position are achieved through the cantilever. It should be noted that in this implementation manner, the receiving cavity is not filled with gas, and no air pressure driving force is formed on the forming platform. The release effect and working efficiency of this implementation manner are not as good as the previous implementation manners.

It should be noted that an inflation port communicating with the receiving cavity is provided at the top of the forming platform. The cantilever has an inflation connector that cooperates and communicates with the inflation port. Through the cooperation of the cantilever and the forming platform, the inflation connector is brought into cooperative communication with the inflation port. Furthermore, the inflation port is provided with a sealing member such as aluminum foil and/or a heat shrink film. The cantilever moves toward the forming platform so that a piercing member on the cantilever pierces the sealing member, thereby enabling the inflation connector to be inserted and cooperatively communicated with the inflation port. In this implementation manner, the cantilever is fixedly connected to or abuts against the forming platform, and the cantilever and the forming platform move synchronously. Of course, the inflation connector may also be independently communicated with the inflation port without relying on the cooperation state between the cantilever and the forming platform.

In some embodiments, the method includes:
A motion zero-position of the forming platform is detected.

The zero-position detection process includes: driving the forming platform to move toward the light-transmissive assembly and determining, via a detection value of an eddy current sensor, whether the forming platform has moved to the light-transmissive assembly; and when the detection value of the eddy current sensor satisfies a first preset condition, determining that the forming platform is moved to the light-transmissive assembly and abuts against the light-transmissive assembly, and determining a position where the forming platform encounters resistance from the light-transmissive assembly as the motion zero-position of the forming platform. The detection value of the eddy current sensor is a change in distance between the eddy current sensor and an elastic element. The elastic element is disposed in cooperation with the cantilever and deforms when the movement of the cantilever is obstructed, causing the distance between the elastic element and the eddy current sensor to change. When the distance change amount reaches or exceeds a first preset threshold, this point is determined as the motion zero-position of the forming platform. The printing zero-position is the position corresponding to the maximum allowable distance between the printing platform and the light-transmissive assembly (i.e., the limiting position for the forming platform moving away from the light-transmissive assembly), or the position corresponding to the minimum allowable distance. Detecting the motion zero-position of the forming platform is to determine the relative position of the forming module and the cantilever.

The method may also include a return-to-zero process. Exemplarily, the return-to-zero process may be performed before the stirring process, i.e., by moving the forming platform to the zero -position, and then stirring is performed from the zero-position according to the first preset position and the second preset position. In some embodiments, the return-to-zero process may also be performed after the stirring process and before the printing process, where the forming platform performs release movement and moves to the printing position from the zero-position to improve printing accuracy. Of course, the return-to-zero process may also be replaced by the zero-position detection.

It should also be noted that, for the implementation manner where the cantilever and the forming platform are fixedly connected, the forming platform is driven by the cantilever. The forming platform moving to the motion zero-position means that the cantilever abuts against the forming platform and causes the forming platform to abut against the light-transmissive assembly (the light-transmissive assembly is supported and tensioned on the printing device). In this state, the clamp on the cantilever can be controlled to clamp the forming platform. That is, when the eddy current sensor detects that the distance change amount reaches or exceeds the first preset threshold, this point is determined as the motion zero-position of the forming platform, and the clamp on the cantilever is controlled to clamp the forming platform.

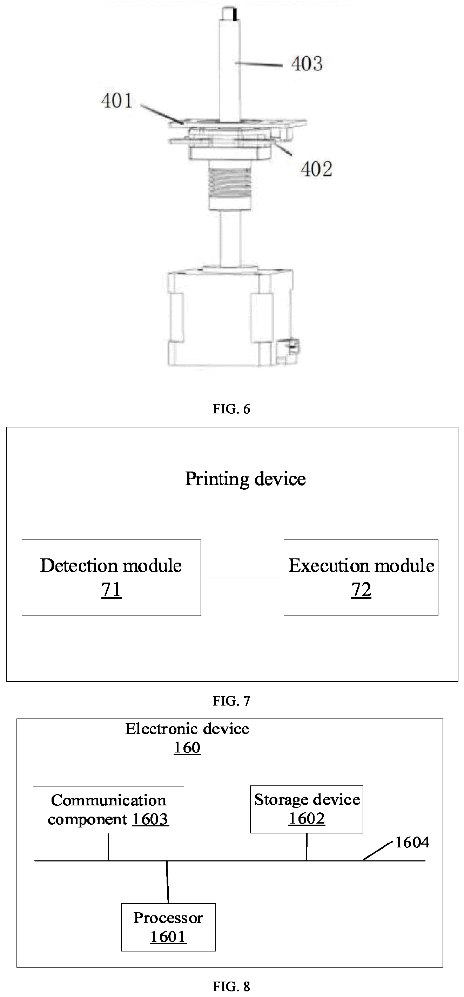

In some embodiments, FIG. 6 is a schematic structural diagram of an eddy current sensor and an elastic element provided by the present disclosure. As shown in FIG. 6, an eddy current sensor 401 and an elastic element 402 are disposed on a lead screw 403, and the elastic element 402 includes an elastic element upper plate. A certain distance is left between the eddy current sensor 401 and the elastic element upper plate. During the zero-position detection process, a driving member drives the lead screw 403 to drive the cantilever to move downward. The cantilever moves toward the forming platform and, after contacting the forming platform, drives the forming platform to move toward the light-transmissive assembly. When the bottom of the forming platform encounters resistance due to contact with the light-transmissive assembly, this resistance is transmitted to the lead screw 403, causing the elastic element 402 to bend and deform upon force application, i.e., the elastic element upper plate deforms.

Based on the sensing principle of the eddy current sensor, the elastic element upper plate is made of a metal material. Due to the deformation of the elastic element upper plate, the distance between the elastic element upper plate and the eddy current sensor changes. The eddy current sensor monitors the change in gap distance in real time. When the distance change amount exceeds the first preset threshold, it is determined that the forming platform has moved to the motion zero-position.

Exemplarily, the motion zero-position of the forming platform is the position corresponding to the maximum allowable distance between the forming platform and the light-transmissive assembly, or the position corresponding to the minimum allowable distance, i.e., the motion zero-position of the forming platform may be an upper zero-position or a lower zero-position.

In some embodiments, the method further includes:
During movement of the forming platform toward the light-transmissive assembly, whether a foreign object obstructs the movement is detected.

Exemplarily, during the movement of the forming platform toward the light-transmissive assembly, an output torque of the cantilever is monitored in real time, or the pressure rise curve within the sealed cavity is directly monitored via a pressure sensor. When the foreign object obstructs the movement, the driving pressure or the pressure in the cavity rises abnormally significantly before reaching the theoretical contact point, exceeding the normal contact pressure threshold.

Exemplarily, during a constant-speed movement phase of the forming platform, its actual position and speed are tracked in real time via an encoder or an eddy current sensor. When a foreign object obstructs the movement, the actual displacement of the forming platform will significantly lag behind the command position while the command continues, or the movement speed will drop abnormally. By comparing whether the deviation between the command position and the actual position exceeds a tolerance, it may be determined whether the foreign object obstructs the movement.

Exemplarily, when the foreign object is detected, the printing device may be stopped, and a prompt box indicating foreign object detection may be popped up through a printing interaction page, instructing the user to raise the forming platform and clean debris within the forming module.

In this embodiment, foreign object detection may improve printing safety and reduce waste of printing material.

In some embodiments, the foreign object detection step specifically includes:
When controlling the forming platform to move toward the light-transmissive assembly, determining, via a detection value of the eddy current sensor, whether the forming platform is obstructed by the foreign object;
When the detection value of the eddy current sensor, such as the distance change amount, reaches or exceeds a second preset threshold (i.e., the detection value satisfies a second preset condition), determining that the foreign object exists between the forming platform and the light-transmissive assembly, and interrupting the printing process.

Exemplarily, the determination of the second preset threshold should enable it to sensitively distinguish between a "normal zero-position contact" state and a "foreign object obstruction" state. Its value is different from the first preset threshold. Generally, the second preset threshold is smaller than the first preset threshold.

In some embodiments, during the printing process, the eddy current sensor continuously monitors a distance change between the eddy current sensor and the elastic element upper plate. When the forming platform moves downward and is obstructed prematurely due to the foreign object such as cured residue between the forming platform and the light-transmissive assembly, the elastic element upper plate is caused to deform, further changing the distance change amount between the elastic element upper plate and the eddy current sensor. If the distance change amount reaches or exceeds the second preset threshold, it is determined that a collision has occurred, and the printing device is controlled to stop running, while an abnormality prompt message is output.

In this embodiment, the principle of foreign object detection based on the eddy current sensor may refer to the cooperation principle of the eddy current sensor and the elastic element in the zero -position detection process, and will not be described in detail here.

In this embodiment, performing foreign object detection using the eddy current sensor and the elastic element may improve the accuracy of foreign object detection.

In the printing method provided by the embodiments of the present disclosure, the method is applied to a printing device. The printing device includes a forming module defining a sealed receiving cavity, a light-transmissive assembly arranged on one side of the receiving cavity and a forming platform arranged opposite to the light-transmissive assembly, the receiving cavity receiving printing material, and the forming platform movable toward or away from the light-transmissive assembly; the printing method includes: determining whether the receiving cavity is sealed to a predetermined standard; controlling the forming platform to move away from the light-transmissive assembly and filling the receiving cavity with gas to release the forming platform from the light-transmissive assembly, and controlling the forming platform to move to a next printing position to perform a light curing process.. The method is intended to achieve the effects of improving 3D printing efficiency, stability, and success rate.

FIG. 7 is a schematic structural diagram of a printing device provided by the present disclosure. The printing device is applied to a printing device. The printing device includes a forming module. The forming module defines a sealed receiving cavity. The forming module includes a light-transmissive assembly arranged on one side of the receiving cavity and a forming platform arranged opposite to the light-transmissive assembly. The receiving cavity is configured to accommodate the printing material. The forming platform is movable toward or away from the light-transmissive assembly. The apparatus includes:
A detection module 71 configured to identify whether the receiving cavity is sealed to the predetermined standard; and
An execution module 72 configured to control the forming platform to move away from the light-transmissive assembly and fill the receiving cavity with gas to release the forming platform from the light-transmissive assembly, and control the forming platform to move to a next printing position to perform a light curing process.

Exemplarily, the detection module 71 is specifically configured to:
Fill the receiving cavity with gas, and identify whether the receiving cavity is sealed to the predetermined standard.

Exemplarily, the detection module 71 is specifically configured to: fill the receiving cavity with gas until the pressure of the receiving cavity is equal to a first preset pressure; monitor the pressure change value of the receiving cavity within a preset time period; and in response to the determination that the pressure change value within the preset time period is less than or equal to the first pressure threshold, determine that the receiving cavity is sealed to the predetermined standard..

Exemplarily, the execution module 72 is further configured to:
Stir the printing material of the receiving cavity.

Exemplarily, the execution module 72 is specifically configured to:
Drive the forming platform to reciprocate to stir the printing material of the receiving cavity.

Exemplarily, the execution module 72 is further configured to:
Alternately perform a filling operation and a pressure relief operation on the receiving cavity.

Exemplarily, the execution module 72 is specifically configured to:
Control the forming platform to move away from the light-transmissive assembly and filling the receiving cavity with gas; and controlling the forming platform to move toward the light-transmissive assembly and relieving pressure from the receiving cavity.

Exemplarily, the execution module 72 is specifically configured to: the forming platform to move away from the light-transmissive assembly to a first preset position; control the forming platform to move toward the light-transmissive assembly to a second preset position; and repeat above blocks until the printing material is stirred to a preset condition.

Exemplarily, the execution module 72 is further configured to: in response to the determination that the forming module has been fixedly disposed on the printing device, control the cantilever to move until the cantilever contacts the forming platform; and control the clamp on the cantilever to clamp the forming platform. Exemplarily, the execution module 72 is specifically configured to: control the forming platform to move away from the light-transmissive assembly by the first preset distance and fill the receiving cavity with gas to release the forming platform from the light-transmissive assembly; after the light-transmissive assembly on the forming platform are released, control the forming platform to move to the next printing position and reduce the pressure in the receiving cavity to perform the light curing process; and repeat the above blocks until the target model is printed. Exemplarily, the execution module 72 is further configured to: during releasing the light-transmissive assembly from the forming platform release, increase a pressure in the receiving cavity until the pressure in the receiving cavity is greater than an ambient pressure; and/or during the light curing process, control the pressure in the receiving cavity to be equal to the ambient pressure.

Exemplarily, controlling the forming platform to move away from the light-transmissive assembly is implemented by any of the following manners by: an air pressure driving manner, which comprises increasing a pressure in the receiving cavity until the pressure in the receiving cavity is higher than an ambient pressure and forming a driving force on the forming platform away from the light-transmissive assembly; or a combined mechanical and air pressure driving manner, which comprises controlling a cantilever of the printing device to move away from the light-transmissive assembly and controlling the pressure in the receiving cavity to increase until the pressure in the receiving cavity is higher than the ambient pressure to form the driving force on the forming platform away from the light-transmissive assembly, driving the forming platform fixedly connected to the cantilever to move. Exemplarily, the forming module includes an identification device. The execution module 72 is further configured to: obtain attribute information of the printing material by identifying an identification device of the forming module; and based on the attribute information, dynamically adjust an execution parameter of the printing device.

Exemplarily, the execution module 72 is further configured to:
Perform a zero-position detection: detecting a motion zero-position of the forming platform.

Exemplarily, the execution module 72 is specifically configured to:
Drive the forming platform to move toward the light-transmissive assembly and determining, via a detection value of an eddy current sensor, whether the forming platform abuts against the light-transmissive assembly; and in response to a determination that the detection value of the eddy current sensor satisfies a first preset condition, determine that the forming platform is moved to the light-transmissive assembly and abuts against the light-transmissive assembly, and determine a position where the forming platform encounters resistance from the light-transmissive assembly as the motion zero-position of the forming platform.

Exemplarily, the execution module 72 is further configured to:
In response to a determination that the forming platform is controlled to move toward the light-transmissive assembly, determine whether the forming platform is obstructed by the foreign object via the detection value of the eddy current sensor; and in response to a determination that the detection value of the eddy current sensor satisfies a second preset condition, determine that the foreign object exists between the forming platform and the light-transmissive assembly.

Exemplarily, the execution module 72 is specifically configured to:
Detecting whether a foreign object obstructs a movement during moving the forming platform toward to the light-transmissive assembly, includes: in response to a determination that the forming platform is controlled to move toward the light-transmissive assembly, determining whether the forming platform is obstructed by the foreign object via the detection value of the eddy current sensor; and in response to a determination that the detection value of the eddy current sensor satisfies a second preset condition, determining that the foreign object exists between the forming platform and the light-transmissive assembly.

The printing device provided in this embodiment can execute the methods provided in the above method embodiments. Its implementation principle and technical effect are similar, and will not be described in detail here.

An embodiment of the present disclosure also provides a printing device, including: a forming module and the printing device according to any of the above embodiments. The forming module defines a sealed receiving cavity. The forming module includes a light-transmissive assembly arranged on one side of the receiving cavity and a forming platform arranged opposite to the light-transmissive assembly. The receiving cavity is configured to accommodate the printing material. The forming platform is movable toward or away from the light-transmissive assembly.

FIG. 8 is a schematic structural diagram of an electronic device provided by the present disclosure. As shown in FIG. 8, the electronic device 160 provided in this embodiment includes: at least one processor 1601 and a storage device 1602. In some embodiments, the device 160 further includes a communication component 1603. The processor 1601, the storage device 1602, and the communication component 1603 are connected via a bus 1604.

In a specific implementation process, the at least one processor 1601 executes computer-executable instructions stored in the storage device 1602, causing the at least one processor 1601 to perform the above method.

The specific implementation process of the processor 1601 can be referred to the above method embodiments. Its implementation principle and technical effect are similar, and will not be described again here.

In the above embodiments, it should be understood that the processor may be a Central Processing Unit (CPU), or other general-purpose processor, a Digital Signal Processor (DSP), an Application Specific Integrated Circuit (ASIC), etc. A general-purpose processor may be a microprocessor or the processor may be any conventional processor, etc. The steps of the method disclosed in conjunction with the invention may be directly implemented by a hardware processor, or performed by a combination of hardware and software modules in the processor.

The storage device may include high-speed Random Access Memory (RAM), and may also include non-volatile memory (NVM), such as at least one disk storage device.

The bus may be an Industry Standard Architecture (ISA) bus, a Peripheral Component Interconnect (PCI) bus, or an Extended Industry Standard Architecture (EISA) bus, etc. The bus may be categorized as an address bus, a data bus, a control bus, etc. For ease of representation, the bus in the drawings of the present disclosure is not limited to only one bus or one type of bus.

The present disclosure also provides a computer program product, including a computer program, which when executed by a processor implements the above method.

The present disclosure also provides a computer-readable storage medium, wherein the computer-readable storage medium stores computer-executable instructions, and when a processor executes the computer-executable instructions, the above method is implemented.

The above readable storage medium may be implemented by any type of volatile or non-volatile storage device or a combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic storage, flash memory, magnetic disk, or optical disk. The readable storage medium may be any available medium that can be accessed by a general-purpose or special-purpose computer.

An exemplary readable storage medium is coupled to the processor, enabling the processor to read information from the readable storage medium and write information to the readable storage medium. Of course, the readable storage medium may also be an integral part of the processor. The processor and the readable storage medium may be located in an Application Specific Integrated Circuits (ASIC). Of course, the processor and the readable storage medium may also exist as discrete components in the device.

The division of units is merely a logical functional division. There may be other division manners in actual implementation. For example, multiple units or components may be combined or integrated into another system, or some features may be ignored or not executed. In another aspect, the mutual coupling or direct coupling or communication connection shown or discussed may be indirect coupling or communication connection through some interfaces, devices, or units, which may be electrical, mechanical, or of other forms.

A unit described as a release component may or may not be physically release. A component shown as a unit may or may not be a physical unit, i.e., may be located in one place, or may be distributed over multiple network units. Some or all of the units may be selected according to actual needs to achieve the objectives of the solutions of the embodiments.

In addition, each functional unit in each embodiment of the present invention may be integrated into one processing unit, or each unit may exist physically release, or two or more units may be integrated into one unit.

If the functions are implemented in the form of software functional units and sold or used as independent products, they may be stored in a computer-readable storage medium. Based on such understanding, the technical solution of the present invention, in essence, or the part contributing to the prior art, or the part of the technical solution, may be embodied in the form of a software product. The computer software product is stored in a storage medium and includes several instructions for causing a computer device (which may be a personal computer, a server, or a network device, etc.) to perform all or part of the steps of the methods described in the various embodiments of the present invention. The aforementioned storage medium includes: a USB flash drive, a removable hard disk, a Read-Only Memory (ROM), a Random Access Memory (RAM), a magnetic disk, or an optical disk, and other media that can store program code.

## Claims

1. A printing method, applied to a printing device comprising a forming module (100) defining a sealed receiving cavity (110), a light-transmissive assembly (140) arranged on one side of the receiving cavity (110) and a forming platform (130) arranged opposite to the light-transmissive assembly (140), the receiving cavity (110) receiving printing material (120), and the forming platform (130) movable toward or away from the light-transmissive assembly (140); the printing method comprising:
determining whether the receiving cavity (110) is sealed to a predetermined standard;
controlling the forming platform (130) to move away from the light-transmissive assembly (140) and filling the receiving cavity (110) with gas to release the forming platform (130) from the light-transmissive assembly (140); and
controlling the forming platform (130) to move to a next printing position to perform a light curing process.

2. The printing method according to claim 1, wherein the determining whether the receiving cavity (110) is sealed to the predetermined standard comprises:
filling the receiving cavity (110) with gas until a pressure of the receiving cavity (110) is equal to a first preset pressure;
monitoring a pressure change value of the receiving cavity (110) within a preset time period; and
in response to a determination that the pressure change value within the preset time period is less than or equal to a first pressure threshold, determining that the receiving cavity (110) is sealed to the predetermined standard.

3. The printing method according to claim 1, further comprising:
stirring the printing material (120) in the receiving cavity (110).

4. The printing method according to claim 3, wherein the stirring the printing material (120) in the receiving cavity (110) comprises:
driving the forming platform (130) to reciprocate to stir the printing material (120) in the receiving cavity (110).

5. The printing method according to claim 4, wherein the stirring the printing material (120) in the receiving cavity (110) further comprises:
alternately performing a filling operation and a pressure relief operation on the receiving cavity (110).

6. The printing method according to claim 4, wherein driving the forming platform (130) to reciprocate to stir the printing material (120) in the receiving cavity (110) comprises:
controlling the forming platform (130) to move away from the light-transmissive assembly (140) and filling the receiving cavity (110) with gas; and
controlling the forming platform (130) to move toward the light-transmissive assembly (140) and relieving pressure from the receiving cavity (110).

7. The printing method according to claim 4, wherein driving the forming platform (130) to reciprocate to stir the printing material (120) in the receiving cavity (110) comprises:
controlling the forming platform (130) to move away from the light-transmissive assembly (140) to a first preset position;
controlling the forming platform (130) to move toward the light-transmissive assembly (140) to a second preset position; and
repeating above blocks until the printing material (120) is stirred to a preset condition.

8. The printing method according to claim 1, further comprising:
in response to a determination that the forming module (100) been fixedly disposed on the printing device, controlling a cantilever (600) to move until the cantilever (600) contacts the forming platform (130); and
controlling a clamp (601) on the cantilever (600) to clamp the forming platform (130).

9. The printing method according to claim **1,** wherein the controlling the forming platform (130) to move away from the light-transmissive assembly (140) and filling the receiving cavity (110) with gas to release the forming platform (130) from the light-transmissive assembly (140) comprises:
controlling the forming platform (130) to move away from the light-transmissive assembly (140) by a first preset distance and filling the receiving cavity (110) with gas to release the forming platform (130) from the light-transmissive assembly (140);
after the light-transmissive assembly (140) on the forming platform (130) are released, controlling the forming platform (130) to move to the next printing position and reducing a pressure in the receiving cavity (110) to perform the light curing process; and
repeating above blocks until a target model is printed.

10. The printing method according to claim 9, further comprising:
during releasing the forming platform (130) from the light-transmissive assembly (140), increasing a pressure in the receiving cavity (110) until the pressure in the receiving cavity (110) is greater than an ambient pressure; and/or
during the light curing process, controlling the pressure in the receiving cavity (110) to be equal to the ambient pressure.

11. The printing method according to claim 1, wherein controlling the forming platform (130) to move away from the light-transmissive assembly (140) by:
increasing a pressure in the receiving cavity (110) until the pressure in the receiving cavity (110) is higher than an ambient pressure and forming a driving force on the forming platform (130) away from the light-transmissive assembly (140); or
controlling a cantilever (600) of the printing device to move away from the light-transmissive assembly (140) and controlling the pressure in the receiving cavity (110) to increase until the pressure in the receiving cavity (110) is higher than the ambient pressure to form the driving force on the forming platform (130) away from the light-transmissive assembly (140), driving the forming platform (130) fixedly connected to the cantilever (600) to move.

12. The printing method according to claim 1, further comprising:
obtaining attribute information of the printing material (120) by identifying an identification device (500) of the forming module (100); and
based on the attribute information, dynamically adjusting an execution parameter of the printing device.

13. The printing method according to claim 1, further comprising:
detecting a motion zero-position of the forming platform (130), comprising:
driving the forming platform (130) to move toward the light-transmissive assembly (140) and determining, via a detection value of an eddy current sensor (401), whether the forming platform (130) abuts against the light-transmissive assembly (140); and
in response to a determination that the detection value of the eddy current sensor (401) satisfies a first preset condition, determining that the forming platform (130) is moved to the light-transmissive assembly (140) and abuts against the light-transmissive assembly (140), and determining a position where the forming platform (130) encounters resistance from the light-transmissive assembly (140) as the motion zero-position of the forming platform (130).

14. The printing method according to claim 13, further comprising:
detecting whether a foreign object obstructs a movement during moving the forming platform (130) toward to the light-transmissive assembly (140), comprising:
in response to a determination that the forming platform (130) is controlled to move toward the light-transmissive assembly (140), determining whether the forming platform (130) is obstructed by the foreign object via the detection value of the eddy current sensor (401); and
in response to a determination that the detection value of the eddy current sensor (401) satisfies a second preset condition, determining that the foreign object exists between the forming platform (130) and the light-transmissive assembly (140).

15. A printing device, comprising: a forming module (100) defining a sealed receiving cavity (110), a light-transmissive assembly (140) arranged on one side of the receiving cavity (110) and a forming platform (130) arranged opposite to the light-transmissive assembly (140), wherein the receiving cavity (110) receives printing material (120), and wherein the forming platform (130) is movable toward or away from the light-transmissive assembly (140);
a storage device (1602); and
at least one processor (1601);
wherein the storage device (1602) stores one or more programs that, when executed by the at least one processor (1601), cause the at least one processor (1601) to implement the printing method according to any one of claims 1 to 14.
